# EUROPÄISCHE PATENTSCHRIFT

(11) **EP 1 381 763 B1**
(45) Veröffentlichungstag und Bekanntmachung des Hinweises auf die Patenterteilung: **29.11.2006**
(21) Anmeldenummer: 02740227.0
(22) Anmeldetag: 04.04.2002
(51) Int. Cl.: F02D 41/12, F02D 21/08

(54) **VERFAHREN ZUM BETREIBEN EINER BRENNKRAFTMASCHINE INSBESONDERE EINES KRAFTFAHRZEUGS**
METHOD FOR OPERATING AN INTERNAL COMBUSTION ENGINE, ESPECIALLY THAT OF A MOTOR VEHICLE
PROCEDE POUR FAIRE FONCTIONNER UN MOTEUR A COMBUSTION INTERNE, NOTAMMENT D'UNE AUTOMOBILE

(30) Priorität: 18.04.2001 DE 10118878
(43) Veröffentlichungstag der Anmeldung: 21.01.2004
(73) Patentinhaber: ROBERT BOSCH GMBH, 70442 Stuttgart (DE)
(72) Erfinder: BLUMENSTOCK, Andreas, 71638 Ludwigsburg (DE); RIES-MUELLER, Klaus, 74906 Bad Rappenau (DE)
(86) Internationale Anmeldenummer: PCT/DE2002/001233
(87) Internationale Veröffentlichungsnummer: WO 2002/084094

(56) Entgegenhaltungen:
- EP-A- 0 904 971
- EP-A- 1 004 760
- US-A- 5 201 173
- US-A- 6 032 753

## Beschreibung

### Stand der Technik

Die Erfindung geht aus von einem Verfahren zum Betreiben einer Brennkraftmaschine insbesondere eines Kraftfahrzeugs, bei dem Luft und Kraftstoff einem Brennraum zugeführt werden, und bei dem Abgas dem Brennraum rückgeführt wird. Die Erfindung betrifft ebenfalls eine entsprechende Brennkraftmaschine sowie ein Steuergerät für eine derartige Brennkraftmaschine.

Ein derartiges Verfahren, eine derartige Brennkraftmaschine und ein derartiges Steuergerät sind ganz allgemein von Brennkraftmaschinen mit Abgasrückführung bekannt, bspw. von einer sog. Benzin-Direkteinspritzung oder von einer sog. Diesel-Direkteinspritzung oder auch von einer sog. Saugrohreinspritzung jeweils mit Abgasrückführung.

Zur Reinigung der bei der Verbrennung des Kraftstoffs entstehenden Schadstoffe ist bei diesen Brennkraftmaschinen ein Katalysator vorgesehen, bspw. sog. ein Dreiwege-Katalysator oder ein NOx-Speicherkatalysator oder ein Oxydationskatalysator. Diese Katalysatoren benötigen für einen optimalen Betrieb eine bestimmte Temperatur, bspw. etwa 300 Grad Celsius.

Eine mögliche Betriebsart der Brennkraftmaschine ist der sogenannte Schubbetrieb, der besser mit Schiebebetrieb bezeichnet wird, da die Brennkraftmaschine im Schiebebetrieb kein Drehmoment erzeugt, sondern ihrerseits von dem rollenden Kraftfahrzeug angetrieben wird. In dem Schiebebetrieb wird kein Kraftstoff dem Brennraum der Brennkraftmaschine zugeführt, obwohl die Drehzahl derselben größer ist als die Leerlaufdrehzahl.

Bei zeitlich längeren Schubphasen besteht die Möglichkeit, daß der Katalysator langsam auskühlt und dann seinen Arbeitsbereich verläßt. Dies ergibt sich daraus, daß in dem Schiebebetrieb keine Verbrennung von Kraftstoff erfolgt und somit kein neues heißes Abgas entsteht. Die Auskühlung des Katalysators hat jedoch zur Folge, daß die Abgase im Motorbetrieb nach einer Schubphase anfänglich nicht mehr optimal gereinigt werden. Gemäss der DE-A-19 727 385 wird in der Schubphase Abgas rückgeführt.

### Aufgabe und Vorteile der Erfindung

Aufgabe der Erfindung ist es, ein Verfahren zu schaffen, mit dem der Katalysator auch nach einer längeren Schubphase der Brennkraftmaschine in der Lage ist, das Abgas möglichst optimal zu reinigen.

Diese Aufgabe wird bei einem Verfahren der eingangs genannten Art erfindungsgemäß dadurch gelöst, mit den Merkmalen gemäss Anspruch 1. Bei einer Brennkraftmaschine und einem Steuergerät der eingangs genannten Art wird die Aufgabe erfindungsgemäß entsprechend gelöst.

Durch die Rückführung von Abgas während des Schiebebetriebs wird erreicht, daß das heiße Abgas nicht die Brennkraftmaschine vollständig verläßt, sondern zumindest teilweise einen Kreislauf in der Brennkraftmaschine bildet. Damit wird die Temperatur des Abgases innerhalb der Brennkraftmaschine nur langsam geringer, obwohl aufgrund der fehlenden Verbrennung von Kraftstoff im Schiebebetrieb kein neues heißes Abgas hinzukommt. Die Temperatur des Katalysators bleibt daher weitgehend erhalten und der Katalysator kühlt nicht oder zumindest nicht so schnell aus.

Es wird in dem Schiebebetrieb weniger Luft dem Brennraum zugeführt. Damit wird vermieden, daß kühle Frischluft in den Brennraum der Brennkraftmaschine gelangt, die eine Verminderung der Temperatur unter anderem des Abgases zur Folge hätte. Damit wird erreicht, daß die Temperatur der vorhandenen Abgase zumindest insoweit nicht vermindert wird, so daß der Katalysator nicht auskühlt. Gegebenenfalls kann dem Brennraum im Schiebebetrieb auch gar keine Luft mehr zugeführt werden.

In dem Schiebebetrieb ist die Drehzahl der Brennkraftmaschine größer als die Leerlaufdrehzahl. Weiterhin ist in dem Schiebebetrieb die Brennkraftmaschine kraftschlüssig mit einem Antriebsrad insbesondere des Kraftfahrzeugs gekoppelt. Ebenfalls wird in dem Schiebebetrieb kein Kraftstoff dem Brennraum der Brennkraftmaschine zugeführt.

Besonders zweckmäßig ist es, wenn geprüft wird, ob sich die Brennkraftmaschine in dem Schiebebetrieb befindet und/oder ob die Temperatur eines Katalysators der Brennkraftmaschine kleiner ist als eine untere Temperatur eines Arbeitsbereichs des Katalysators.

Ebenfalls ist es besonders zweckmäßig, wenn das Abgas nur dann rückgeführt wird, wenn der Schiebebetrieb vorliegt, und wenn die Temperatur des Katalysators kleiner ist als die untere Temperatur. Entsprechend ist es besonders zweckmäßig, wenn die Luft nur dann nicht zugeführt wird, wenn der Schiebebetrieb vorliegt, und wenn die Temperatur des Katalysators kleiner ist als die untere Temperatur.

Von besonderer Bedeutung ist die Realisierung des erfindungsgemäßen Verfahrens in der Form eines Computerprogramms, das für das Steuergerät der Brennkraftmaschine vorgesehen ist. Das Computerprogramm ist auf einem Computer des Steuergeräts ablauffähig und zur Ausführung des erfindungsgemäßen Verfahrens geeignet. In diesem Fall wird also die Erfindung durch das Computerprogramm realisiert, so dass dieses Computerprogramm in gleicher Weise die Erfindung darstellt wie das Verfahren, zu dessen Ausführung das Computerprogramm geeignet ist. Das Computerprogramm kann vorzugsweise auf einem Flash-Memory abgespeichert werden. Als Computer kann vorzugsweise ein Mikroprozessor vorhanden sein.

### Ausführungsbeispiele der Erfindung

- Figur 1: zeigt ein schematisches Blockschaltbild eines Ausführungsbeispiels einer erfindungsgemäßen Brennkraftmaschine, und
- Figur 2: zeigt ein schematisches Blockschaltbild eines Ausführungsbeispiels eines erfindungsgemäßen Verfahrens zum Betreiben der Brennkraftmaschine der Figur 1.

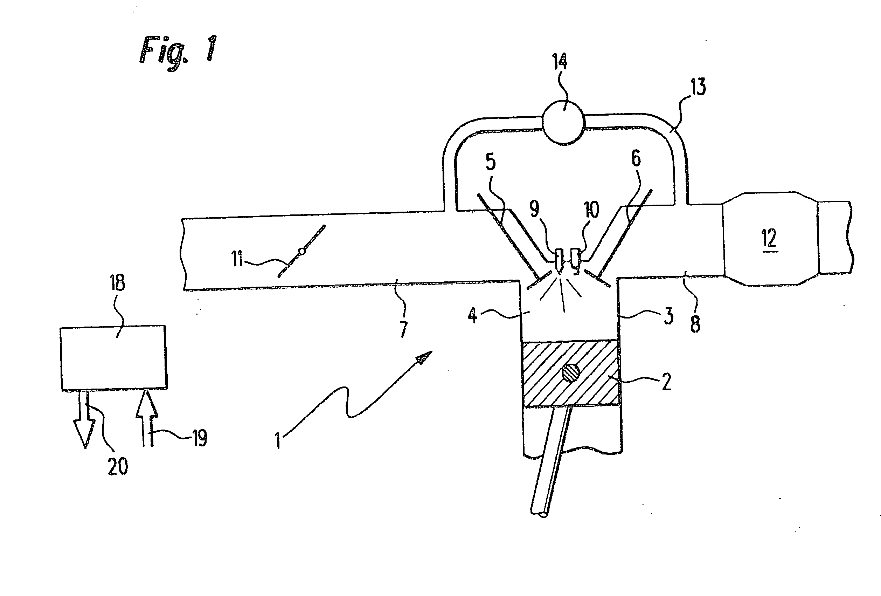

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlassventil 5 und ein Auslassventil 6 begrenzt ist. Mit dem Einlassventil 5 ist ein Ansaugrohr 7 und mit dem Auslassventil 6 ist ein Abgasrohr 8 gekoppelt.

Im Bereich des Einlassventils 5 und des Auslassventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Von dem Abgasrohr 8 führt ein Abgasrückführrohr 13 zurück zu dem Ansaugrohr 7. In dem Abgasrückführrohr 13 ist ein Abgasrückführventil 14 untergebracht, mit dem die Menge des in das Ansaugrohr 7 rückgeführten Abgases eingestellt werden kann. Das Abgasrückführrohr 13 und das Abgasrückführventil 14 bilden eine sogenannte Abgasrückführung.

Der Kolben 2 wird durch die Verbrennung des Kraftstoffs in dem Brennraum 4 in eine Hin- und Herbewegung versetzt, die auf eine nicht-dargestellte Kurbelwelle übertragen wird und auf diese ein Drehmoment ausübt.

Ein Steuergerät 18 ist von Eingangssignalen 19 beaufschlagt, die mittels Sensoren gemessene Betriebsgrößen der Brennkraftmaschine 1 darstellen. Beispielsweise ist das Steuergerät 18 mit einem Luftmassensensor, einem Lambda-Sensor, einem Drehzahlsensor und dergleichen verbunden. Des Weiteren ist das Steuergerät 18 mit einem Fahrpedalsensor verbunden, der ein Signal erzeugt, das die Stellung eines von einem Fahrer betätigbaren Fahrpedals und damit das angeforderte Drehmoment angibt. Das Steuergerät 18 erzeugt Ausgangssignale 20, mit denen über Aktoren bzw. Steller das Verhalten der Brennkraftmaschine 1 beeinflusst werden kann. Beispielsweise ist das Steuergerät 18 mit dem Einspritzventil 9, der Zündkerze 10 und der Drosselklappe 11 und dergleichen verbunden und erzeugt die zu deren Ansteuerung erforderlichen Signale.

Unter anderem ist das Steuergerät 18 dazu vorgesehen, die Betriebsgrößen der Brennkraftmaschine 1 zu steuern und/oder zu regeln. Beispielsweise wird die von dem Einspritzventil 9 in den Brennraum 4 eingespritzte Kraftstoffmasse von dem Steuergerät 18 insbesondere im Hinblick auf einen geringen Kraftstoffverbrauch und/oder eine geringe Schadstoffentwicklung gesteuert und/oder geregelt. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

Die Brennkraftmaschine 1 der Figur 1 kann in einer Mehrzahl von Betriebsarten betrieben werden. So ist es möglich, die Brennkraftmaschine 1 in einem Homogenbetrieb, einem Schichtbetrieb, einem homogenen Magerbetrieb, einem Schichtbetrieb mit homogener Grundladung und dergleichen zu betreiben.

Im Homogenbetrieb wird der Kraftstoff während der Ansaugphase von dem Einspritzventil 9 direkt in den Brennraum 4 der Brennkraftmaschine 1 eingespritzt. Der Kraftstoff wird dadurch bis zur Zündung noch weitgehend verwirbelt, so dass im Brennraum 4 ein im Wesentlichen homogenes Kraftstoff/Luft-Gemisch entsteht. Das zu erzeugende Moment wird dabei im Wesentlichen über die Stellung der Drosselklappe 11 von dem Steuergerät 18 eingestellt. Im Homogenbetrieb werden die Betriebsgrößen der Brennkraftmaschine 1 derart gesteuert und/oder geregelt, dass Lambda gleich Eins ist. Der Homogenbetrieb wird insbesondere bei Vollast angewendet.

Der homogene Magerbetrieb entspricht weitgehend dem Homogenbetrieb, es wird jedoch das Lambda auf einen Wert größer Eins eingestellt.

Im Schichtbetrieb wird der Kraftstoff während der Verdichtungsphase von dem Einspritzventil 9 direkt in den Brennraum 4 der Brennkraftmaschine 1 eingespritzt und zwar möglichst in den Bereich der Zündkerze 10. Damit ist bei der Zündung durch die Zündkerze 10 kein homogenes Gemisch im Brennraum 4 vorhanden, sondern eine Kraftstoffschichtung. Die Drosselklappe 11 kann, abgesehen von Anforderungen z.B. der Abgasrückführung, vollständig geöffnet und die Brennkraftmaschine 1 damit entdrosselt betrieben werden. Das zu erzeugende Moment wird im Schichtbetrieb weitgehend über die Kraftstoffmasse eingestellt. Mit dem Schichtbetrieb kann die Brennkraftmaschine 1 insbesondere im Leerlauf und bei Teillast betrieben werden.

Zwischen den genannten Betriebsarten der Brennkraftmaschine 1 kann in Abhängigkeit von Betriebsgrößen der Brennkraftmaschine 1 hin- und her- bzw. umgeschaltet werden. Derartige Umschaltungen werden von dem Steuergerät 18 durchgeführt. Hierzu ist in dem Steuergerät 18 ein Betriebsartenkennfeld vorhanden, in dem für jeden Betriebspunkt der Brennkraftmaschine 1 eine zugehörige Betriebsart abgespeichert ist.

Als weitere Betriebsart kann die Brennkraftmaschine 1 in einem Schubbetrieb oder besser Schiebebetrieb betrieben werden. Dieser Schiebebetrieb liegt vor, wenn das Fahrpedal sich in einem nicht betätigten Zustand befindet, wenn sich die Brennkraftmaschine 1 nicht im Leerlauf befindet, wenn kein Kraftstoff in den Brennraum 4 der Brennkraftmaschine 1 eingespritzt wird, und wenn die Brennkraftmaschine 1 eingekuppelt ist, d.h. wenn der Kolben 2 im wesentlichen kraftschlüssig mit den Antriebsrädern des Kraftfahrzeugs gekoppelt ist.

Der Schiebebetrieb liegt beispielsweise vor, wenn das Kraftfahrzeug eine Gefällstrecke hinunterfährt. In diesem Fall wird die eingekuppelte Brennkraftmaschine 1 durch das den Berg hinunterrollende Kraftfahrzeug weiterhin angetrieben, ohne daß der Fahrer das Fahrpedal betätigt, und ohne daß Kraftstoff in die Brennkraftmaschine 1 eingespritzt wird.

Im Schiebebetrieb, insbesondere bei längeren Schubphasen, kühlt der Katalysator 12 langsam aus. Dies ist eine Folge der fehlenden Verbrennungen im Brennraum 4 der Brennkraftmaschine 1 während des Schiebebetriebs und des damit fehlenden heißen Abgases.

Der Katalysator 12 besitzt einen temperaturabhängigen Arbeitsbereich, in dem er optimal arbeitet. Handelt es sich bei dem Katalysator 12 beispielsweise um einen NOx-Speicherkatalysator, so liegt dieser Arbeitsbereich bei etwa 250 Grad Celsius bis etwa 450 Grad Celsius. Bei einem Oxidationskatalysator sollte die Temperatur über etwa 300 Grad Celsius liegen.

Durch das Auskühlen des Katalysators 12 im Schiebebetrieb ist es möglich, daß der Arbeitsbereich des Katalysators 12 verlassen wird, weil die Temperatur des Katalysators 12 zu gering wird. Dies wird durch das nachfolgend beschriebene Verfahren vermieden.

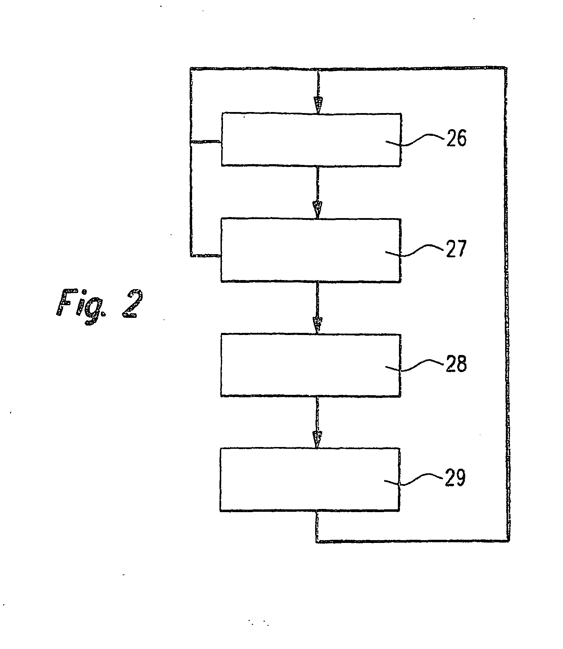

In der Figur 2 ist ein Verfahren dargestellt, mit dem das Auskühlen des Katalysators 12 im Schiebebetrieb vermieden wird. Das Verfahren wird von dem Steuergerät 18 durchgeführt.

In einem Schritt 26 der Figur 2 wird geprüft, ob sich die Brennkraftmaschine 1 in einem Schiebebetrieb befindet. Hierzu können eine Mehrzahl von Betriebsgrößen der Brennkraftmaschine 1 abgefragt werden, insbesondere die Stellung des Fahrpedals, die Drehzahl der Brennkraftmaschine 1, die in den Brennraum 4 eingespritzte Kraftstoffmasse, oder dergleichen.

Wird in dem Schritt 26 erkannt, daß kein Schiebebetrieb vorliegt, so ist das Verfahren beendet. Das Verfahren kann dann nach einer vorgegebenen Zeitdauer erneut durchgeführt werden.

Wird in dem Schritt 26 ein Schiebebetrieb erkannt, so wird in einem nachfolgenden Schritt 27 geprüft, ob sich die Temperatur des Katalysators 12 in seinem Arbeitsbereich befindet. Dies kann mit Hilfe eines Temperatursensors vorgenommen werden, der die Temperatur des Katalysators 12 erfaßt. Ebenfalls kann die Temperatur des Katalysators 12 mit Hilfe einer Modellierung nachgebildet und auf diese Weise erfaßt werden. Weiterhin kann der Arbeitsbereich des Katalysators 12 durch einen oder mehrere Schwellwerte vorgegeben werden, mit dem bzw. denen die Temperatur des Katalysators 12 verglichen wird. Der unteren Temperatur des Arbeitsbereichs des Katalysators 12 kann beispielsweise ein Schwellwert zugeordnet sein, der geringfügig größer ist als diese untere Temperatur, so daß das Verfahren der Figur 2 bereits eingreift, bevor die Temperatur des Katalysators 12 den Arbeitsbereich verläßt.

Befindet sich die Temperatur des Katalysators 12 in seinem Arbeitsbereich, so ist das Verfahren beendet. Das Verfahren kann dann nach einer vorgegebenen Zeitdauer erneut durchgeführt werden.

Wird jedoch erkannt, daß der Katalysator 12 sich nicht mehr in seinem Arbeitsbereich befindet, so bedeutet dies, daß der Katalysator 12 bereits ausgekühlt ist, bzw. daß die Temperatur des Katalysators 12 kurz davor ist, den Arbeitsbereich des Katalysators 12 zu verlassen.

Es wird dann in einem nachfolgenden Schritt 28 das Abgasrückführventil 14 geöffnet, und zwar insbesondere vollständig. Weiterhin wird in einem nachfolgenden Schritt 29 die Drosselklappe 11 weiter geschlossen.

Aufgrund der weiter geschlossenen Drosselklappe 11 wird erreicht, daß weniger kühle Frischluft der Brennkraftmaschine 1 und damit dem Katalysator 12 zugeführt wird. Weiterhin entsteht aufgrund des geöffneten Abgasrückführventils 14 ein Kreislauf des heißen Abgases innerhalb der Brennkraftmaschine 1. Und zwar wird das heiße Abgas zumindest teilweise über die Abgasrückführung in das Ansaugrohr 7 rückgeführt, um dort über den Brennraum 4 wieder in das Abgasrohr 8 zu gelangen. Es verläßt also nur ein Teil des heißen Abgases die Brennkraftmaschine 1.

Durch das Vermindern von kühler Frischluft sowie durch den beschriebenen Kreislauf von heißem Abgas wird erreicht, daß die Temperatur des Abgases im Abgasrohr 8 nicht oder zumindest nicht so schnell sinkt. Dies ist gleichbedeutend damit, daß die Temperatur des Katalysators 12 nicht oder zumindest nur sehr langsam sinkt. Das Auskühlen des Katalysators 12 wird damit vermieden. Insbesondere wird vermieden, daß die Temperatur des Katalysators 12 den Arbeitsbereich desselben verläßt.

Sobald der Schiebebetrieb beendet ist und/oder sobald die Temperatur des Katalysators 12 sich wieder innerhalb des erwünschten Arbeitsbereichs befindet, wird das Verfahren beendet. Die Drosselklappe 11 und das Abgasrückführventil 14 werden wieder entsprechend dem jeweiligen Betriebszustand der Brennkraftmaschine 1, also in Abhängigkeit von dem Homogenbetrieb oder dem Schichtbetrieb oder dergleichen betrieben.

## Patentansprüche

1. Verfahren zum Betreiben einer Brennkraftmaschine (1) insbesondere eines Kraftfahrzeugs, bei dem Luft und Kraftstoff einem Brennraum (4) zugeführt werden, und bei dem Abgas dem Brennraum (4) rückgeführt wird, **dadurch gekennzeichnet, dass** in einem Schiebebetrieb der Brennkraftmaschine (1) das Abgas dem Brennraum (4) rückgeführt wird, und dass in dem Schiebebetrieb die dem Brennraum (4) zugeführte Luft vermindert wird.

2. Verfahren nach Anspruch 1, **dadurch gekennzeichnet, dass** in dem Schiebebetrieb die Drehzahl der Brennkraftmaschine (1) größer ist als die Leerlaufdrehzahl.

3. Verfahren nach einem der vorstehenden Ansprüche, **dadurch gekennzeichnet, dass** in dem Schiebebetrieb die Brennkraftmaschine (1) kraftschlüssig mit einem Antriebsrad insbesondere des Kraftfahrzeugs gekoppelt ist.

4. Verfahren nach einem der vorstehenden Ansprüche, **dadurch gekennzeichnet, dass** in dem Schiebebetrieb kein Kraftstoff dem Brennraum (4) der Brennkraftmaschine (1) zugeführt wird.

5. Verfahren nach einem der vorstehenden Ansprüche, **dadurch gekennzeichnet, dass** geprüft wird, ob sich die Brennkraftmaschine (1) in dem Schiebebetrieb befindet.

6. Verfahren nach Anspruch 5, **dadurch gekennzeichnet, daß** geprüft wird, ob die Temperatur eines Katalysators (12) der Brennkraftmaschine (1) kleiner ist als eine untere Temperatur eines Arbeitsbereichs des Katalysators (12).

7. Verfahren nach Anspruch 5 oder 6, **dadurch gekennzeichnet, dass** das Abgas nur dann dem Brennraum (4) rückgeführt wird, wenn der Schiebebetrieb vorliegt, und wenn die Temperatur des Katalysators (12) kleiner ist als die untere Temperatur.

8. Verfahren nach Anspruch 7, **dadurch gekennzeichnet, dass** die dem Brennraum (4) zugeführte Luft nur dann vermindert wird, wenn der Schiebebetrieb vorliegt, und wenn die Temperatur des Katalysators (12) kleiner ist als die untere Temperatur.

9. Computerprogramm zur Anwendung bei einem Verfahren nach einem der Ansprüche 1 - 8.

10. Computerprogramm nach Anspruch 9, **dadurch gekennzeichnet, dass** es auf einem Speicher abgespeichert ist, insbesondere auf einem Flash-Memory.

11. Steuergerät (18) für eine Brennkraftmaschine (1) insbesondere eines Kraftfahrzeugs, mit einem Computerprogramm zur Anwendung bei einem Verfahren nach einem der Ansprüche 1 bis 8.

12. Brennkraftmaschine (1) insbesondere für ein Kraftfahrzeug, mit einem Steuergerät (18) mit einem Computerprogramm zur Anwendung bei einem Verfahren nach einem der Ansprüche 1 bis 8.

## Claims

1. Method for operating an internal combustion engine (1), in particular of a motor vehicle, in which method air and fuel are supplied to a combustion chamber (4), and in which method exhaust gas is recirculated back to the combustion chamber (4), **characterized in that** the exhaust gas is recirculated back to the combustion chamber (4) in an overrun operating mode of the internal combustion engine (1), and **in that** the air supplied to the combustion chamber (4) is reduced in the overrun operating mode.

2. Method according to Claim 1, **characterized in that**, in the overrun operating mode, the speed of the internal combustion engine (1) is greater than the idle speed.

3. Method according to one of the preceding claims, **characterized in that**, in the overrun operating mode, the internal combustion engine (1) is connected in a force-fitting manner to a driving wheel, in particular of the motor vehicle.

4. Method according to one of the preceding claims, **characterized in that**, in the overrun operating mode, no fuel is supplied to the combustion chamber (4) of the internal combustion engine (1).

5. Method according to one of the preceding claims, **characterized in that** it is checked as to whether the internal combustion engine (1) is in the overrun operating mode.

6. Method according to Claim 5, **characterized in that** it is checked as to whether the temperature of a catalytic converter (12) of the internal combustion engine (1) is below a lower temperature of a working range of the catalytic converter (12).

7. Method according to Claim 5 or 6, **characterized in that** the exhaust gas is recirculated back to the combustion chamber (4) only when the overrun operating mode is present and the temperature of the catalytic converter (12) is below the lower temperature.

8. Method according to Claim 7, **characterized in that** the air supplied to the combustion chamber (4) is reduced only when the overrun operating mode is present and the temperature of the catalytic converter (12) is below the lower temperature.

9. Computer program for use in a method according to one of Claims 1 - 8.

10. Computer program according to Claim 9, **characterized in that** it is stored on a memory, in particular on a flash memory.

11. Control device (18) for an internal combustion engine (1), in particular of a motor vehicle, having a computer program for use in a method according to one of Claims 1 to 8.

12. Internal combustion engine (1), in particular for a motor vehicle, having a control unit (18) with a computer program for use in a method according to one of Claims 1 to 8.

## Revendications

1. Procédé de gestion d'un moteur à combustion interne (1), notamment d'un véhicule automobile, selon lequel l'air et le carburant alimentent la chambre de combustion (4) dans laquelle sont recyclés les gaz d'échappement,
**caractérisé en ce qu'**
en mode de poussée du moteur à combustion interne (1), les gaz d'échappement sont recyclés dans la chambre de combustion et on réduit l'air alimentant la chambre de combustion (4).

2. Procédé selon la revendication 1,
**caractérisé en ce qu'**
en mode de poussée, la vitesse de rotation du moteur à combustion interne (1) est supérieure au régime de ralenti.

3. Procédé selon l'une des revendications précédentes,
**caractérisé en ce qu'**
en mode de poussée, le moteur à combustion interne (1) est couplé par une liaison de force à une roue motrice, notamment du véhicule.

4. Procédé selon l'une des revendications précédentes,
**caractérisé en ce qu'**
en mode de poussée, la chambre de combustion (4) du moteur à combustion interne (1) ne reçoit pas de carburant.

5. Procédé selon l'une quelconque des revendications précédentes,
**caractérisé en ce qu'**
on vérifie si le moteur à combustion interne (1) est en mode de poussée.

6. Procédé selon la revendication 5,
**caractérisé en ce qu'**
on vérifie si la température d'un catalyseur (12) du moteur à combustion interne (1) est inférieure à une température limite, inférieure, d'une plage de fonctionnement du catalyseur (12).

7. Procédé selon la revendication 5 ou 6,
**caractérisé en ce qu'**
on recycle les gaz d'échappement dans la chambre de combustion (4) que si on est en mode de poussée et si la température du catalyseur (12) est en dessous de la température inférieure.

8. Procédé selon la revendication 7,
**caractérisé en ce que**
l'air alimentant la chambre de combustion (4) n'est diminué que si l'on est en mode de poussée et si la température du catalyseur (12) est en dessous de la température inférieure.

9. Programme d'ordinateur appliqué à un procédé selon l'une des revendications 1 à 8.

10. Programme d'ordinateur selon la revendication 9,
**caractérisé en ce qu'**
il est enregistré dans une mémoire, notamment une mémoire flash.

11. Appareil de commande (18) d'un moteur à combustion interne (1), notamment d'un véhicule automobile, comportant un programme d'ordinateur pour l'application d'un procédé selon l'une des revendications 1 à 8.

12. Moteur à combustion interne (1), notamment pour un véhicule automobile, comportant un appareil de commande (18) avec un programme d'ordinateur pour l'application d'un procédé selon l'une des revendications 1 à 8.
